# EUROPÄISCHE PATENTANMELDUNG

(11) **EP 3 444 490 A1**
(43) Veröffentlichungstag der Anmeldung: **20.02.2019**
(21) Anmeldenummer: 18187299.5
(22) Anmeldetag: 03.08.2018
(51) Int. Cl.: F16C 33/12, F16C 33/14, B23K 26/362, B23K 26/0622, B23K 26/352, B23K 26/359

(54) **VERFAHREN ZUR HERSTELLUNG EINES MEHRSCHICHTGLEITLAGERELEMENTES**

(30) Priorität: 18.08.2017 AT 5015517 U
(71) Anmelder: Miba Gleitlager Austria GmbH, 4663 Laakirchen (AT)
(72) Erfinder: LEONARDELLI, Georg, 4810 Gmunden (AT)
(74) Vertreter: Burger, Hannes

(57) **Zusammenfassung**

Verfahren zur Herstellung eines Mehrschichtgleitlagerelementes mit einer ersten Schicht aus einem Metall, die eine Innenseite aufweist, nach dem diese Innenseite durch überstreichen der gesamten Innenseite mit einem Laser gereinigt wird und danach auf die Innenseite der ersten Schicht zumindest eine weitere Schicht aufgebracht wird. Die Reinigung wird mit einem Ultrakurzpulslaser durchgeführt.

## Beschreibung

Die Erfindung betrifft ein Verfahren zur Herstellung eines Mehrschichtgleitlagerelementes mit einer ersten Schicht aus einem Metall, die eine Innenseite aufweist, nach dem diese Innenseite durch überstreichen der gesamten Innenseite mit einem Laser gereinigt wird und danach auf die Innenseite der ersten Schicht zumindest eine weitere Schicht aufgebracht wird.

Mehrschichtgleitlager und deren Herstellung sind im Stand der Technik vielfach beschrieben. Im einfachsten Fall handelt es sich um Zweischichtlager, bei denen auf einer Stützschicht eine Laufschicht angeordnet ist. Es sind aber auch Ausführungsvarianten bekannt, die mehr als zwei Schichten aufweisen.

Bei der Herstellung dieser Mehrschichtgleitlager sind häufig Umformprozesse und damit verbunden auch mechanische Bearbeitungen von Oberflächen, wie Feinbohren oder Stoß-Räumen, erforderlich, um vorgegebenen Geometrien der Mehrschichtgleitlager einhalten zu können. Dies trifft auch auf die Stützschicht, die sogenannte Rückenmetallschicht, zu. Häufig besteht diese aus einem Stahl, es können aber auch andere Werkstoffe, wie Bronzen, verwendet werden.

Um die Werkzeuge möglichst zu schonen, die Spanngenauigkeit zu verbessern, um Teilebeschädigungen zu vermeiden oder um die Verbundfestigkeit der miteinander verbundenen Schichten zu verbessern, müssen Oberflächen von Verunreinigungen aus vorangegangenen Arbeitsschritten befreit werden, so auch von Ölen und Fetten. Dazu können Lösungsmittel verwendet werden, die häufig auch manuell mittels entsprechenden Tüchern aufgetragen werden. Diese Reinigungsmethoden sind aber aufgrund der sehr geringen Prozessqualität durch sehr rasch verschmutzende Tücher und den damit verbundenen verringerten Reinigungseffekt problematisch. Nicht zuletzt sind Lösungsmittels an sich für die Gesundheit problematisch.

Eine sichere Reinigung von einer zu beschichtenden Oberfläche ist mit abtragenden Verfahren möglich. Ebenso wie das chemische Reinigen führt aber auch dieses mechanische Reinigen zu Kontaminationen und Verschleppungen von Material und Verschmutzungen. Diese wiederum kann nicht nur zur Verringerung der Haftfestigkeit der auf diese Oberfläche abzuscheidenden Beschichtung führen, sondern auch zur Ausbildung von Korrosionskeimen, insbesondere wenn diese Kontaminationen in die gereinigte Schicht eingebettet werden. Letzteres kann beispielsweise dadurch entstehen, dass die zu beschichtende Oberfläche teilweise aufgeschmolzen wird.

Die Aufgabe vorliegender Erfindung besteht darin, ein verbessertes Reinigungs-verfahren für die Herstellung von Mehrschichtgleitlagern bereitzustellen.

Die Aufgabe der Erfindung wird bei dem eingangs genannten Verfahren dadurch gelöst, dass die Reinigung mit einem Ultrakurzpulslaser durchgeführt wird.

Von Vorteil ist dabei, dass die Reinigung der Innenseite der ersten Schicht mit gleichbleibender Qualität und hoher Sicherheit des Nichtaufschmelzens durchgeführt werden kann, da durch die Verwendung eines Ultrakurzpulslasers relativ wenig Energie in die jeweils der Reinigung unterzogenen Oberflächenbereiche eingebracht wird. Es entstehen damit keine einzelnen Löcher mit umgeschmolzenen Rändern. Durch das Verdampfen der Fette und Öle sind dabei auch keine Lösungsmittel mehr erforderlich, sodass auch keine Rückstände von Lösungsmittel auf oder in der ersten Schicht verbleiben. Insbesondere können durch die Verwendung eines Ultrakurzpulslasers auch Gefügeveränderungen aufgrund des Wärmeeintrags in die erste Schicht besser vermieden werden. Die Reinigung kann also maschinell einfacher ohne Änderung des Gefüges der ersten Schicht durchgeführt werden.

Nach einer Ausführungsvariante des Verfahrens kann vorgesehen sein, dass als erste Schicht eine Kupferbasislegierung, insbesondere eine Bronze, verwendet wird. Kupferbasislegierungen, wie insbesondere Bronzen, zeigen eine ausgeprägtes Reflexionsverhalten, womit der Einsatz eines Lasers zur Reinigung der Oberfläche einer Schicht eines Mehrschichtgleitlagerelementes bislang problematisch war, wenn nicht sogar zumindest teilweise unmöglich. Durch die Verwendung eines Ultrakurzpulslasers entstehen die mit der Laserreinigung von Oberflächen von Kupferbasislegierungen verbundenen Probleme nicht oder nicht sehr ausgeprägt, nämlich dass diese relativ lange der Laserstrahlung ausgesetzt werden, wodurch die Gefahr des Aufschmelzens von Oberflächenbereichen deutlich steigt.

Bevorzugt wird gemäß einer anderen Ausführungsvariante des Verfahrens mit der Reinigung der Innenseite diese gleichzeitig unter Ausbildung einer Mikrogeometrie aufgeraut. Durch die Aufrauhung, also den Materialabtrag, kann die Qualität der Oberflächenreinigung weiter erhöht werden. Gleichzeitig kann damit aber auch eine Oberfläche geschaffen werden, mit der eine verbesserte Haftung der darauf abzuscheidenden Schicht erreicht werden kann.

Um diese Effekte weiter zu verbessern, insbesondere die Haftfestigkeit der weiteren Schicht auf der ersten Schicht zu erhöhen, kann nach Ausführungsvarianten dazu vorgesehen sein, dass die Mikrogeometrie mit einem arithmetischen Mittenrauwert Ra nach DIN EN ISO 4287:2010 zwischen 30 nm und 1 µm hergestellt wird und/oder dass die Mikrogeometrie mit einer gemittelten Rautiefe Rz nach DIN EN ISO 4287:2010 zwischen 200 nm und 5 µm bei einer maximalen Einzelrautiefe Rmax nach DIN EN ISO 4287:2010 zwischen 200 nm und 5 µm hergestellt wird.

Nach einer anderen Ausführungsvariante des Verfahrens kann vorgesehen sein, dass die Reinigung durch zeilenförmiges Überstreichen der Innenseite der ersten Schicht mit dem Laser in Bearbeitungsbahnen durchgeführt wird, wobei die Bearbeitungsbahnen einander überlappen. Durch die Überlappung der Laserpunkte kann die Prozesssicherheit weiter erhöht werden.

Es kann nach einer weiteren Ausführungsvariante des Verfahrens auch vorgesehen sind, dass die Reinigung der Innenseite der ersten Schicht mit einem Abstand zum Laser erfolgt, der der Fokuslänge des Lasers entspricht. Es kann damit nicht nur die Energieeffizienz der Oberflächenreinigung verbessert werden, sondern kann damit auch die voranstehend angesprochene Mikrogeometrie besser hergestellt werden, da mit dem Laser Spuren auf der Innenseite der ersten Schicht erzeugt werden können, beispielsweise in Form eines Musters aufgrund des zeilenförmigen Überstreichens können.

Besonders bevorzugt wird als weitere Schicht eine Gleitlackschicht auf die erste Schicht aufgebracht. Insbesondere bei derartigen Schichten kommen die Vorteile des Verfahrens zum Tragen, da damit die Dauerbelastbarkeit der an sich im Vergleich zu metallischen Schichten Verschleiß anfälligeren Polymerschichten verbessert werden kann.

Zum besseren Verständnis der Erfindung wird diese anhand der nachfolgenden Beschreibung näher erläutert.

Einführend sei festgehalten, dass die in der Beschreibung gewählten Lageangaben, wie z.B. oben, unten, seitlich usw. auf die unmittelbar beschriebene Aus-führungsform des Mehrschichtgleitlagerelementes bezogen sind und bei einer Lageänderung sinngemäß auf die neue Lage zu übertragen sind.

Das Mehrschichtgleitlagerelement kann in Form einer Halbschale ausgebildet sein, und bildet in diesem Fall zusammen mit zumindest einem weiteren Gleitlagerelement ein Gleitlager aus, wie dies an sich bekannt ist. Es ist weiter möglich, dass das Mehrschichtgleitlagerelement als Gleitlagerbuchse (in diesem Fall ist das Mehrschichtgleitlagerelement gleichzeitig das Gleitlager) oder als Anlaufring ausgebildet ist. Weiter besteht die Möglichkeit einer anderen Teilung, beispielsweise einer Drittelteilung, sodass das Mehrschichtgleitlagerelement mit zwei weiteren Gleitlagerelementen zu einem Gleitlager kombiniert wird, wobei zumindest eines der beiden weiteren Gleitlagerelemente ebenfalls durch das Mehrschichtgleitlagerelement gebildet sein kann. In diesem Fall deckt das Mehrschichtgleitlagerelement nicht einen Winkelbereich von 180 ° sondern einen Winkelbereich von 120 ° ab. Es besteht aber auch die Möglichkeit, dass zumindest eines der zumindest einen weiteren Gleitlagerelemente durch das Mehrschichtgleitlagerelement gebildet wird.

Insbesondere ist das Mehrschichtgleitlagerelement zur Verwendung in der Motorenindustrie bzw. in Motoren vorgesehen.

Ein Mehrschichtgleitlagerelement, das im Zuge seiner Herstellung mit dem Verfahren nach der Erfindung gereinigt wird, weist zumindest eine erste Schicht und zumindest eine weitere Schicht auf.

Es sei bereits an dieser Stelle erwähnt, dass unter dem Begriff "Reinigung" sowohl die Entfernung von zumindest einem Fett an sich, als auch die Entfernung von zumindest einem Öl sowie anderer Verunreinigungen, wie beispielsweis Lösungsmittel, verstanden wird. Bei den Fetten und Ölen handelt es sich um solche, wie sie in der Herstellung von Mehrschichtgleitlagerelementen üblicherweise verwendet werden.

Zusätzlich dazu kann dabei auch gegebenenfalls vorhandener Schmutz entfernt werden. Dieser Schmutz kann auch in Form von typischen Ablagerungen von Bearbeitungsflüssigkeiten aus vorhergehenden Bearbeitungsschritten vorliegen. Die Bearbeitungsflüssigkeiten umfassen dabei auch, aber beschränken sich nicht ausschließlich auf, Kühlschmierstoffe, Bearbeitungsöle, Bohremulsionen, etc. Die Ablagerungen können auch salzartiger oder anderer fester Natur sein.

Die erste Schicht ist insbesondere die Stützschicht eines Mehrschichtleitlagerelementes. Diese ist in der Regel die radial äußerste Schicht eines Radialgleitlagers.

Die weitere Schicht ist insbesondere die Laufschicht im Falle eines Zweischicht- oder Mehrschichtgleitlagerelementes. Die Laufschicht ist jene Schicht, die im Betrieb mit dem zu lagernden Bauteil, also insbesondere einer Welle, in Kontakt steht, sofern nicht noch ein zusätzlicher sogenannter Flash aufgebracht ist, der beispielsweise dem Einlauf des Mehrschichtgleitlagers dient.

Es sei aber erwähnt, dass die erste Schicht auch durch eine andere Schicht eines Mehrschichtgleitlagerelementes gebildet werden kann, beispielsweise eine sogenannte Lagermetallschicht.

Jedenfalls wird die weitere Schicht unmittelbar auf der ersten Schicht des Mehrschichtgleitlagerelementes abgeschieden.

Die Stützschicht bildet das sogenannte Rückseitenmetall, das einer Lageraufnahme, in der das Mehrschichtgleitlagerelement im Betrieb aufgenommen ist, zugewandt ist. Normalerweise bildet diese Rückseitenmetallschicht bei schalenförmigen Mehrschichtgleitlagerelementen die radial äußere Schicht, sofern keine Antifrettingschicht, die Beschädigungen eines Gleitlagers aufgrund von Mikrobewegungen zwischen der Lageraufnahme und dem Mehrschichtgleitlagerelement verhindern soll, aufgebracht ist.

Die Stützschicht kann aus einem Stahl bestehen. Es können aber auch andere, bekannte metallische Werkstoffe verwendet werden. Vorzugsweise wird die Stützschicht oder generell die erste Schicht durch eine Kupferbasislegierung gebildet, insbesondere eine Bronze.

Die erste Schicht kann aber auch durch eine Aluminiumlegierung gebildet sein.

Gemäß einer weiteren bevorzugten Ausführungsvariante des Verfahrens wird die weitere Schicht aus einem Gleitlack hergestellt. Als Gleitlack wird dabei ein Lack verstanden, der ein Lösungsmittel(gemisch), zumindest eine Vorstufe für ein Polymer und zumindest einen Festschmierstoff sowie gegebenenfalls Verstärkungsmittel enthält. Aus diesem wird nach dem Aufbringen auf die erste Schicht durch Trocknung und Polymerisation, insbesondere bei erhöhter Temperatur, ein feste Schicht mit Gleiteigenschaften hergestellt.

Bevorzugt wird als Polymer ein Polyimid, insbesondere ein Polyamidimid, hergestellt. Als Festschmierstoffe werden vorzugsweise Grafit und MoS₂ verwendet. Die Verstärkungsmittel können partikelförmig sein, beispielsweise Oxide oder Mischoxide, insbesondere Bismutvanadate, Chrom-Antimon-Rutile oder Mischungen daraus.

Es können aber auch andere bekannte Gleitlacke verwendet werden.

Das Mehrschichtgleitlagerelement kann auch mehr als zwei Schichten aufweisen. So kann beispielsweise zwischen der Stützschicht und der Laufschicht die genannte Lagermetallschicht und/oder zumindest eine Bindeschicht und/oder zumindest eine Diffusionssperrschicht angeordnet sein.

Die metallischen Werkstoffe, die in Mehrschichtgleitlagerelementen für die Lauf-schicht, die Lagermetallschicht, die Bindeschicht und die Diffusionssperrschicht verwendet werden können, sind aus dem Stand der Technik bekannt, sodass diesbezüglich darauf verwiesen sei.

Auch die Verfahren zur Herstellung eines Mehrschichtgleitlagerelementes an sich sind aus dem Stand der Technik bekannt. Im Wesentlichen lassen sich hier zwei Verfahrenswege unterscheiden. Gemäß einem ersten wird dabei ein ebenes Substrat aus dem Werkstoff für die Stützschicht hergestellt und auf diesem gegebenenfalls unter Zwischenanordnung von zumindest einer Zwischenschicht (wie insbesondere zumindest eine der voranstehend genannten) die Laufschicht angeordnet, woraus das Verbundmaterial entsteht. Hierzu zählen z.B. die klassischen Verfahren wie Walzplattieren, Gießplattieren, Sintern. Aus diesem Rohling wird danach durch Umformen das Mehrschichtgleitlagerelement geformt.

Daneben gibt es auch Verfahren bei denen die Umformung des Rohlings vor dem Abscheiden des Werkstoffes für die Laufschicht durchgeführt wird. Hierzu zählen beispielsweise die galvanische Abscheidung und PVD-Verfahren, wie z.B. Sputtern.

Zudem besteht die Möglichkeit, dass die Stützschicht durch das Bauteil selbst, also beispielsweise eine Pleuelstange, insbesondere im Bereich von dessen Pleuelauge, gebildet wird. In diesem Fall wird dann die Laufschicht durch Direktbeschichtung des Pleuelauges aufgebracht.

Bei allen Verfahren kann eine mechanische Bearbeitung im Zuge der Herstellung des Mehrschichtgleitlagerelementes erforderlich sein, um die gewünschte bzw. erforderliche Geometrie mit möglichst geringen Toleranzen bereitstellen zu können. Üblicherweise handelt es sich dabei größtenteils um spanende Arbeitsschritte, wie beispielsweise das Feinbohren oder das Stoß-Räumen. Es werden bei diesen mechanischen Bearbeitungen Kühlmittel in Form von Ölen bzw. ölhaltigen Flüssigkeiten verwendet, um die Werkzeuge vor Überhitzung zu schützen und damit die Standzeit der Werkzeuge zu verlängern.

Weiter können die Werkstoffe für die einzelnen Schichten bzw. Verbundmaterialien daraus während des Herstellungsverfahrens des Mehrschichtgleitlagerelementes mit Fetten in den Bearbeitungsmaschinen in Berührung kommen.

Die Fette und Öle sowie generell Schmutz müssen wieder entfernt werden. Dies betrifft insbesondere die Innenseite der Stützschicht (bzw. generell der ersten Schicht), bevor auf diese eine weitere Schicht abgeschieden wird.

Als Innenseite wird generell die radial innere Oberfläche bzw. die einem zu lagernden Bauteil näherliegende Oberfläche einer Schicht eines Mehrschichtgleitlagerelementes bezeichnet.

Für die Reinigung der Innenseite der ersten Schicht wird ein Ultrakurzpulslaser verwendet. Es handelt sich dabei um eine Laserstrahlquelle, die gepulstes Laserlicht mit Pulsdauern im Bereich von Pikosekunden bis Femtosekunden oder im Bereich von Pikosekunden bis Attosekunden oder im Bereich von Femtosekunden bis Attosekunden aussenden. Die Pulsdauer ist also kleiner als 1 ns.

Die Reinigung der Innenseite kann nach einer spanenden Bearbeitung und vor einer weiteren mechanischen Bearbeitung, insbesondere zur Entfernung der Späne (die beispielsweise beim Feinbohren anfallen), durchgeführt werden. Die Entfernung der Späne erfolgt bevorzugt durch Bürsten. Insbesondere wird das Bürsten ausschließlich nach einer Entfettung durchgeführt, da damit weniger Späne an den Bürsten haften bleiben.

Zur Reinigung der entsprechenden Oberfläche des Mehrschichtgleitlagerelementes (es wird darunter im Sinne der Erfindung auch eine Vorstufe des fertigen Mehrschichtgleitlagerelementes verstanden) wird die gesamte Innenseite der ersten Schicht (bzw. der Stützschicht), mit dem Laser abgefahren, sodass also der Laser im Zuge der Reinigung jede Stelle dieser Oberfläche mindestens einmal überstreicht.

Das Überstreichen der Oberfläche mit dem Laser kann linienförmig in Form eines Punktrasters erfolgen. Von Vorteil ist dabei, wenn der Fokus des Lasers auf der die zu reinigenden Oberfläche liegt, wozu die Entfernung zwischen der zu reinigenden Oberfläche und dem Laser der Fokuslänge entspricht. Dadurch wird die Oberfläche punktförmig von dem Laser getroffen.

Es kann aber auch vorgesehen sein, dass die zu reinigende Oberfläche außerhalb des Fokuspunktes des Lasers liegt, wozu die Entfernung zwischen der Oberfläche und dem Laser kleiner oder größer ist, als dessen Fokuslänge. Dadurch wird die Oberfläche von der Laserstrahlung in Form eines Kreises oder einer Ellipse, je nachdem welche Stellung der Laser zur Oberfläche einnimmt, getroffen.

Dabei kann die Entfernung zwischen der Oberfläche und dem Laser (d.h. dem Austritt des Lichtstrahls aus dem Laser) um einen Wert kleiner oder größer als die Fokuslänge sein, der ausgewählt ist aus einem Bereich von 0,5 mm bis 20 mm, insbesondere aus einem Bereich von 2 mm bis 5mm.

Die Abstände der Punkte oder Kreise des genannten Rasters werden insbesondere so gewählt, dass die mit dem Laser pro Puls überstrichenen Bereiche aneinander angrenzen oder bevorzugt einander überlappen.

Weiter kann der Abstand zwischen Laser und zu entfettender Oberfläche so gewählt werden, dass der Fokuspunkt unterhalb der ersten Schicht, also außerhalb, liegt.

Die Reinigung mittels Laser kann ohne Abtrag von dem Metall, aus dem die erste Schicht besteht, erfolgen. Weiter kann die Laserreinigung so durchgeführt werden, dass keine Änderung des Gefüges der Stützschicht erfolgt. Zudem kann die Reinigung auch derart durchgeführt werden, dass keine Verbindungen mit einem Bestandteil des Werkstoffes der ersten Schicht, wie beispielsweise Oxide, mit dem Laser entfernt werden.

Gemäße einer bevorzugten Ausführungsvariante des Verfahrens kann mit der Reinigung der Innenseite der ersten Schicht diese gleichzeitig unter Ausbildung einer Mikrogeometrie aufgeraut werden, wozu ein entsprechender Materialabtrag von der Oberfläche der ersten Schicht erfolgt.

Die Mikrogeometrie wird bevorzugt mit einem arithmetischen Mittenrauwert Ra nach DIN EN ISO 4287:2010 zwischen 30 nm und 1 µm, bevorzugt zwischen 30 nm und 70 nm, und/oder mit einer gemittelten Rautiefe Rz nach DIN EN ISO 4287:2010 zwischen 200 nm und 5 µm, bevorzugt zwischen 200 nm und 350 nm, bei einer maximalen Einzelrautiefe Rmax nach DIN EN ISO 4287:2010 zwischen 200 nm und 5 µm hergestellt. Selbstverständlich kann dabei Rmax nicht kleiner sein als Rz.

Für die Durchführung der Reinigung werden Laserpulse verwendet, wobei vorzugsweise die Anzahl der Pulse hoch und die Impulsdauer kurz gewählt ist, wodurch eine thermische Belastung der zu reinigenden Oberfläche vermieden werden kann. Die Pulsfrequenz kann zwischen 10 kHz und 1 MHz variieren. Die Flächenleistung ist abhängig von Pulsfrequenz und dem Abstand der einzelnen Laserpunkte auf der zu entfettenden Oberfläche voneinander (die Größe der Laserpunkte kann zwischen 50 µm und 300 µm betragen). Beispielsweise beträgt bei 35 W Ausgangsleistung des Lasers die max. Pulsenergie ca. 175 µJ und die Flächenleistung ca. 3 J/cm² (Pulsfrequenz 200 kHz, Pulsdauer 1 ps).

Es ist weiter bevorzugt, wenn die Impulsstärke und die Impulsdauer des Lasers während der gesamten Reinigung der Oberfläche konstant gehalten werden.

Nach einer Ausführungsvariante kann vorgesehen sein, dass die Reinigung durch zeilenförmiges Überstreichen der Innenseite der ersten Schicht mit dem Laser in Bearbeitungsbahnen durchgeführt wird, wobei die Bearbeitungsbahnen einander überlappen. Der Überlappungsbereich kann dabei ausgewählt werden aus 1 % bis 50 % % der Breite einer Bearbeitungsbahn. Sämtliche Bearbeitungsbahnen weisen dabei bevorzugt die gleiche Breite auf.

Die Ausführungsbeispiele beschreiben mögliche Ausführungsvarianten des Verfahrens, wobei auch Kombinationen der einzelnen Ausführungsvarianten untereinander möglich sind.

## Patentansprüche

1. Verfahren zur Herstellung eines Mehrschichtgleitlagerelementes mit einer ersten Schicht aus einem Metall, die eine Innenseite aufweist, nach dem diese Innenseite durch überstreichen der gesamten Innenseite mit einem Laser gereinigt wird und danach auf die Innenseite der ersten Schicht zumindest eine weitere Schicht aufgebracht wird, **dadurch gekennzeichnet, dass** die Reinigung mit einem Ultrakurzpulslaser durchgeführt wird.

2. Verfahren nach Anspruch 1, **dadurch gekennzeichnet, dass** als erste Schicht eine Kupferbasislegierung, insbesondere eine Bronze, verwendet wird.

3. Verfahren nach Anspruch 1 oder 2, **dadurch gekennzeichnet, dass** mit der Reinigung der Innenseite diese gleichzeitig unter Ausbildung einer Mikrogeometrie aufgeraut wird.

4. Verfahren nach Anspruch 3, **dadurch gekennzeichnet, dass** die Mikrogeometrie mit einem arithmetischen Mittenrauwert Ra nach DIN EN ISO 4287:2010 zwischen 30 nm und 1 µm hergestellt wird.

5. Verfahren nach einem der Ansprüche 1 bis 4, **dadurch gekennzeichnet, dass** die Mikrogeometrie mit einer gemittelten Rautiefe Rz nach DIN EN ISO 4287:2010 zwischen 200 nm und 5 µm bei einer maximalen Einzelrautiefe Rmax nach DIN EN ISO 4287:2010 zwischen 200 nm und 5 µm hergestellt wird.

6. Verfahren nach einem der Ansprüche 1 bis 5, **dadurch gekennzeichnet, dass** die Reinigung durch zeilenförmiges Überstreichen der Innenseite der ersten Schicht mit dem Laser in Bearbeitungsbahnen durchgeführt wird, wobei die Bearbeitungsbahnen einander überlappen.

7. Verfahren nach einem der Ansprüche 1 bis 6, **dadurch gekennzeichnet, dass** die Reinigung der Innenseite der ersten Schicht mit einem Abstand zum Laser durchgeführt wird., der der Fokuslänge des Lasers entspricht.

8. Verfahren nach einem der Ansprüche 1 bis 7, **dadurch gekennzeichnet, dass** als weitere Schicht eine Gleitlackschicht aufgebracht wird.
